# DEMANDE DE BREVET EUROPEEN

(11) **EP 2 386 848 A1**
(43) Date de publication de la demande: **16.11.2011**
(21) Numéro de dépôt: 11165611.2
(22) Date de dépôt: 11.05.2011
(51) Int. Cl.: G01N 21/88

(54) **Installation de contrôle de la qualité d'une surface d'un objet**

(30) Priorité: 11.05.2010 FR 1002006
(71) Demandeur: Visuol Technologies, 57070 Saint Julien les Metz (FR)
(72) Inventeur: Surrel, Yves, 42100, SAINT ETIENNE (FR)
(74) Mandataire: Delorme, Nicolas

(57) **Abrégé**

Cette installation comporte un support (1) de l'objet, un panneau (2) comprenant un réseau (3) de franges alternant des lignes claires (30) et sombres (31), le réseau présentant une première série de franges parallèles s'étendant suivant une première direction et selon un premier pas (p), et une seconde série de franges parallèles s'étendant suivant une seconde direction perpendiculaire à la première direction, et selon un second pas (p), des moyens d'éclairage agencés pour éclairer le réseau (3), au moins un moyen de capture d'image présentant un champ de vision, chaque moyen de capture étant agencé pour capturer une image du réseau réfléchie ou transmise par la surface de l'objet, et au moins un élément sélectionné dans le groupe comportant le support, le panneau et les moyens de capture est mobile entre une pluralité de positions, le déplacement entre deux positions successives de chaque élément sélectionné étant conçu de manière à introduire un décalage de phase prédéterminé entre deux images du réseau réfléchies ou transmises par ladite surface.

## Description

La présente invention se rapporte à une installation de contrôle de la qualité d'une surface d'un objet.

Le contrôle de la qualité d'une surface peut être réalisé par déflectométrie à décalage de phase.

La déflectométrie à décalage de phase est une technique consistant à déterminer la géométrie d'une surface réfléchissante ou transparente d'un objet par la forme de ses pentes et courbures locales, à partir de la déformation de l'image d'une mire, notamment de type grille, réfléchie ou transmise par la surface de l'objet. Par « mire», on entend un réseau de franges alternant des lignes claires et sombres, généralement à profil sinusoïdal ou binaire à transition franche de luminosité.

La déformation de l'image de la mire est capturée par au moins un moyen de capture d'image, notamment de type caméra, chaque moyen de capture présentant un champ de vision. Le ou chaque moyen de capture est agencé pour capturer dans le champ de vision correspondant une image du réseau de franges réfléchie ou transmise par la surface de l'objet. L'image du réseau de franges réfléchie ou transmise par la surface de l'objet contient un signal périodique formé par la luminance du réseau de franges réfléchie ou transmise par la surface de l'objet.

Le signal périodique est échantillonné sur au moins une période avec un minimum de trois échantillons pour une mesure de phase. Puis la carte de phase de l'image du réseau de franges est extraite classiquement des échantillons du signal périodique selon une méthode d'extraction de la composante fondamentale de Fourier.

Pour obtenir une mesure complète des pentes de la surface de l'objet à contrôler, deux directions orthogonales des franges sont nécessaires. En effet, les pentes ont deux composantes ; si la géométrie de la surface à contrôler est décrite dans un repère cartésien (x, y, z) par la fonction z(x, y), les deux composantes des pentes locales sont ∂z/∂x et ∂z/∂y.

Deux techniques utilisées en déflectométrie sont connues de l'état de la technique :
- le décalage de phase temporel,
- le décalage de phase spatial.

Le décalage de phase temporel nécessite classiquement l'utilisation d'un affichage informatique d'une mire par un moniteur (de type LCD ou plasma) ou d'un vidéoprojecteur projetant sur un écran diffusant (en réflexion ou en transmission).

La mire est déplacée par traitement informatique de manière à introduire un décalage de phase prédéterminé entre deux images du réseau de franges réfléchies ou transmises par la surface de l'objet. L'inconvénient principal du décalage de phase temporel est la limitation de la taille du moniteur qui ne permet pas de réaliser des mesures des pentes pour une surface à contrôler de grande taille. Par « grande taille », on entend une surface présentant une superficie supérieure à 0,5 m².

Par ailleurs, l'emploi d'un vidéoprojecteur n'est pas adapté aux environnements industriels du fait de sa fragilité, de son coût élevé et de la durée de vie fortement limitée des ampoules utilisées. En outre, l'emploi d'un vidéoprojecteur rend l'installation encombrante car il faut y prévoir l'espace séparant le vidéoprojecteur de l'écran diffusant.

Le décalage de phase spatial utilise une mire fixe. La mesure de la phase de l'image du réseau de franges réfléchie ou transmise par la surface de l'objet est effectuée au voisinage d'un point de la surface de l'objet à partir de la capture d'image d'un pixel d'une caméra visant ce point et par un groupe de pixels contigus. Ainsi, un premier inconvénient du décalage de phase spatial est une limitation de la résolution spatiale de la mesure de phase car plusieurs pixels contigus sont nécessaires pour faire une mesure locale.

Par ailleurs, un deuxième inconvénient du décalage de phase spatial est la contrainte que l'image du réseau de franges réfléchie ou transmise par la surface de l'objet ne doit pas être trop déformée afin que la variation de la fréquence spatiale apparente de ladite image soit suffisamment faible pour extraire la phase. Ainsi, seuls des objets quasi plans, quasi sphériques, quasi cylindriques ou quasi toriques peuvent bénéficier d'un contrôle de surface par décalage de phase spatial.

La présente invention vise à remédier en tout ou partie aux inconvénients précités et concerne une installation de contrôle de la qualité d'une surface d'un objet remarquable en ce qu'elle comporte :
- un support de l'objet,
- un panneau comprenant un réseau de franges alternant des lignes claires et sombres, le réseau de franges présentant une première série de franges sensiblement parallèles s'étendant suivant une première direction et selon un premier pas, et une seconde série de franges sensiblement parallèles s'étendant suivant une seconde direction sensiblement perpendiculaire à la première direction, et selon un second pas,

- des moyens d'éclairage agencés pour éclairer le réseau de franges,
- au moins un moyen de capture d'image, notamment de type caméra, le ou chaque moyen de capture présentant un champ de vision, et étant agencé pour capturer dans le champ de vision correspondant une image du réseau de franges réfléchie ou transmise par la surface de l'objet, et
au moins un élément sélectionné dans le groupe comportant le support de l'objet, le panneau et le ou chaque moyen de capture est mobile entre une pluralité de positions, le déplacement entre deux positions successives de chaque élément sélectionné étant conçu de manière à introduire un décalage de phase prédéterminé entre deux images du réseau de franges réfléchies ou transmises par la surface de l'objet.

Ainsi, la présence d'un panneau formant une mire permet d'envisager la réalisation d'une mire de grande taille simple à mettre en oeuvre et à faible coût, notamment par impression de lignes sombres croisées sur un panneau de couleur claire, et par là-même permet d'effectuer un contrôle de qualité d'une surface de grande taille telle qu'une surface d'un véhicule automobile, contrairement au décalage de phase temporel. En outre, un tel panneau est robuste et pérenne, ce qui est favorable pour des environnements industriels.

Par ailleurs, un tel réseau de franges permet une mesure complète des pentes de la surface à contrôler de l'objet.

Une telle mobilité de l'élément sélectionné dans le groupe comportant le support de l'objet, le panneau et les moyens de capture permet l'introduction du décalage de phase ainsi que le contrôle de la qualité d'une surface d'un objet non nécessairement quasi plane, quasi sphérique, quasi cylindrique ou quasi torique, ce qui n'est pas envisageable dans le décalage de phase spatial.

Dans un mode de réalisation, le panneau est mobile suivant la première et la seconde direction du réseau de franges respectivement entre une première et une seconde pluralité de positions, le déplacement entre deux positions successives de la première et de la seconde pluralité de positions correspondant respectivement à une fraction entière prédéterminée du premier et du second pas du réseau de franges.

Ainsi, une telle mobilité du panneau permet d'introduire un décalage de phase prédéterminé entre deux images du réseau de franges réfléchies ou transmises par la surface de l'objet.

Avantageusement, le ou chaque moyen de capture d'image est agencé pour capturer l'image du réseau de franges réfléchie ou transmise par la surface de l'objet pour chacune de la première et de la seconde pluralité de positions du panneau.

Ainsi, un tel agencement du ou de chaque moyen de capture permet d'optimiser la résolution spatiale de la mesure de phase. En effet, c'est le même pixel qui va capturer le signal périodique généré par le déplacement du panneau. Ce même pixel permet une mesure de la phase correspondant exactement au point de l'objet vu par ce pixel. Un tel agencement du ou de chaque moyen de capture permet de s'affranchir d'une mesure de phase dépendante d'un groupe de pixels contigus.

Selon une forme d'exécution, l'installation comporte des moyens de déplacement du panneau comprenant au moins un premier actionneur et au moins un second actionneur, de préférence du type linéaire électrique ou linéaire pneumatique, le premier et le second actionneur étant agencés pour respectivement déplacer le panneau suivant la première et la seconde direction du réseau de franges.

Ainsi, de tels moyens de déplacement assurent la cinématique du panneau suivant la première et la seconde direction du réseau de franges.

Avantageusement, l'installation comporte des moyens de guidage, de préférence des rails de guidage, agencés pour guider le panneau suivant la première et la seconde direction du réseau de franges.

Ainsi, de tels moyens de guidage permettent d'améliorer la précision de la cinématique du panneau.

Selon une réalisation particulière, le panneau présente :
- une face dite avant destinée à être orientée vers l'objet, et comprenant le réseau de franges,
- une face dite arrière opposée,
- des orifices traversant ménagés en son sein,
et le ou chaque moyen de capture est fixé sur la face arrière du panneau de manière à capturer dans le champ de vision correspondant à travers les orifices traversant une image du réseau de franges réfléchie ou transmise par la surface de l'objet.

Selon un mode de réalisation, l'installation comporte un moyen de capture et le support de l'objet est mobile autour du point de la surface de l'objet situé au centre du champ de vision du moyen de capture, lorsque l'objet est disposé sur le support, le déplacement entre deux positions successives du support étant conçu de manière à introduire un décalage de phase prédéterminé entre deux images du réseau de franges réfléchies par la surface de l'objet.

Ainsi, une telle mobilité du support est une alternative à la mobilité du panneau pour introduire un décalage de phase prédéterminé entre deux images du réseau de franges réfléchies par la surface de l'objet.

Selon un mode de réalisation, le ou chaque moyen de capture est mobile autour du centre du champ de vision correspondant entre la pluralité de positions, le centre du champ de vision correspondant étant destiné à viser un point fixe de la surface de l'objet.

Ainsi, une telle mobilité du ou de chaque moyen de capture est une alternative à la mobilité du panneau et à la mobilité du support pour introduire un décalage de phase prédéterminé entre deux images du réseau de franges réfléchies ou transmises par la surface de l'objet. En outre, une telle mobilité du ou de chaque moyen de capture est particulièrement adaptée « en transmission », c'est-à-dire pour introduire un décalage de phase prédéterminé entre deux images du réseau de franges transmises par la surface de l'objet.

Selon une variante de réalisation, le ou chaque moyen de capture est mobile en translation relativement à la surface de l'objet entre la pluralité de positions, et l'installation comporte des moyens de traitement des images capturées, les moyens de traitement étant configurés pour recaler lesdites images capturées par translation sur un point fixe de la surface de l'objet.

Ainsi, cette variante est particulièrement avantageuse lorsque chaque moyen de capture est mobile en rotation autour du centre du champ de vision correspondant visant un point fixe de la surface de l'objet, ce point fixe pouvant être éloigné du moyen de capture, par exemple de 1,5 à 2 m. Le mouvement du moyen de capture qui est un couplage entre une translation et une rotation d'angle très faible (de l'ordre du degré à quelques degrés) peut s'avérer difficile à mettre en oeuvre pour assurer que l'image capturée dans le champ de vision ne bouge pas au pixel près.

En effet, selon la variante de réalisation, le ou chaque moyen de capture est simplement translaté ce qui simplifie le mouvement mécanique, et la visée de la référence qui est le point fixe de la surface de l'objet est assurée par un recalage par translation des images capturées par l'intermédiaire de moyens de traitement.

Selon une caractéristique avantageuse, le premier pas du réseau de franges est sensiblement égal au second pas.

Ainsi, l'échantillonnage des signaux périodiques formés par la luminance du réseau de franges réfléchie ou transmise par la surface de l'objet ainsi que l'extraction de phase des échantillons sont simplifiés et nécessitent moins de temps de calcul.

Avantageusement, le panneau est réalisé dans une matière souple et s'étend de manière à former une portion de cylindre.

Ainsi, une telle forme du panneau permet d'augmenter de manière significative la taille apparente de l'image du panneau sur un objet de forme convexe, l'objet étant destiné à être situé à l'intérieur de la portion de cylindre.

D'autres caractéristiques et avantages apparaîtront dans la description qui va suivre de trois modes de réalisation d'une installation de contrôle de la qualité d'une surface d'un objet selon l'invention, donnés à titre d'exemples non limitatifs, en référence aux dessins annexés dans lesquels :
- la figure 1 est une vue partielle d'une installation selon un premier mode de réalisation,
- la figure 2 est une vue schématique d'une matrice de déplacements du panneau illustré à la figure 1,
- la figure 3 est une vue partielle schématique d'une installation selon un deuxième mode de réalisation,
- la figure 4 est une vue partielle schématique d'une installation selon un troisième mode de réalisation,
- la figure 5 est une vue analogue à la figure 3 illustrant une variante d'exécution du deuxième mode de réalisation.

Pour les différentes variantes de réalisation, les mêmes références pourront être utilisées pour des éléments identiques ou assurant la même fonction, par souci de simplification de la description.

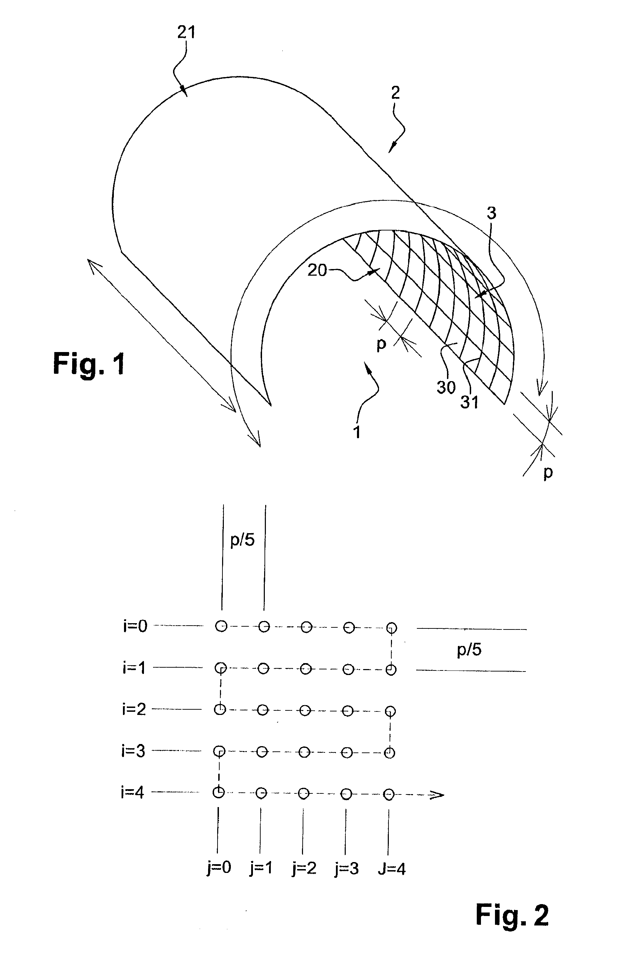

L'installation de contrôle de la qualité d'une surface d'un objet illustrée à la figure 1 comporte :
- un support 1 de l'objet tel qu'un sol,
- un panneau 2,
- des moyens d'éclairage (non représentés), tels que des tubes fluorescents ou un éclairage à diodes électroluminescentes,
- des moyens de capture d'image comportant des caméras (non représentées).

Le panneau 2 comprend :
- une face dite avant 20 destinée à être orientée vers l'objet,
- une face dite arrière 21 opposée,
- des orifices traversant (non représentés) ménagés en son sein.

La face avant 20 du panneau 2 comprend un réseau 3 de franges alternant des lignes claires 30 et sombres 31, le réseau 3 de franges présentant une première série de franges sensiblement parallèles s'étendant suivant une première direction curviligne et selon un pas p, et une seconde série de franges sensiblement parallèles s'étendant suivant une seconde direction sensiblement perpendiculaire à la première direction curviligne, et selon le pas p.

Selon une forme d'exécution, le panneau 2 est réalisé dans un matériau opaque et les moyens d'éclairage sont agencés pour éclairer la face avant du panneau 2.

Selon une variante d'exécution, le panneau 2 est réalisé dans un matériau translucide et les moyens d'éclairage sont agencés pour éclairer la face arrière du panneau 2.

Les caméras sont fixées sur la face arrière 21 du panneau 2. Chaque caméra présente un champ de vision et est agencée de manière à capturer dans leur champ de vision à travers les orifices traversant une image du réseau 3 de franges réfléchie ou transmise par la surface de l'objet. Avantageusement, les caméras peuvent être synchronisées entre elles.

Le panneau 2 est réalisé dans une matière souple et s'étend de manière à former sensiblement une portion de cylindre dont la génératrice s'étend sensiblement parallèlement à la seconde direction du réseau 3 de franges. L'objet est destiné à être disposé à l'intérieur de la portion de cylindre.

Le panneau 2 est mobile entre une pluralité de positions, le déplacement entre deux positions successives étant conçu de manière à introduire un décalage de phase prédéterminé entre deux images du réseau 3 de franges réfléchies ou transmises par la surface de l'objet.

Pour ce faire, le panneau 2 est mobile suivant la première et la seconde direction du réseau 3 de franges respectivement entre une première et une seconde pluralité de positions, le déplacement entre deux positions successives de la première et de la seconde pluralité de positions correspondant à une fraction entière prédéterminée du pas p du réseau 3 de franges.

Dans l'exemple illustré à la figure 2, le panneau 2 est mobile suivant la première et la seconde direction du réseau 3 de franges respectivement entre une première pluralité de cinq positions (notées j et numérotées de 0 à 4) une seconde pluralité de cinq positions (notées i et numérotées de 0 à 4), le déplacement entre deux positions successives de la première et de la seconde pluralité de positions correspondant à un cinquième du pas p du réseau 3 de franges.

Les caméras sont agencées pour capturer l'image du réseau 3 de franges réfléchie ou transmise par la surface de l'objet pour chacune de la première et de la seconde pluralité de positions du panneau 2.

L'installation comporte des moyens de déplacement du panneau 2 (non représentés) comprenant :
- au moins un premier actionneur, pouvant être de type linéaire électrique ou linéaire pneumatique, agencé pour déplacer le panneau 2 suivant la première direction du réseau 3 de franges,
- au moins un second actionneur, pouvant être de type linéaire électrique ou linéaire pneumatique, agencé pour déplacer le panneau 2 suivant la seconde direction du réseau 3 de franges.

L'installation comporte :
- deux rails de guidage circulaires (non représentés) disposés de part et d'autre du panneau 2 et agencés pour guider le panneau 2 suivant la première direction du réseau 3 de franges,
- deux rails de guidage longitudinaux (non représentés) disposés de part et d'autre du panneau 2 et agencés pour guider le panneau 2 suivant la seconde direction du réseau 3 de franges.

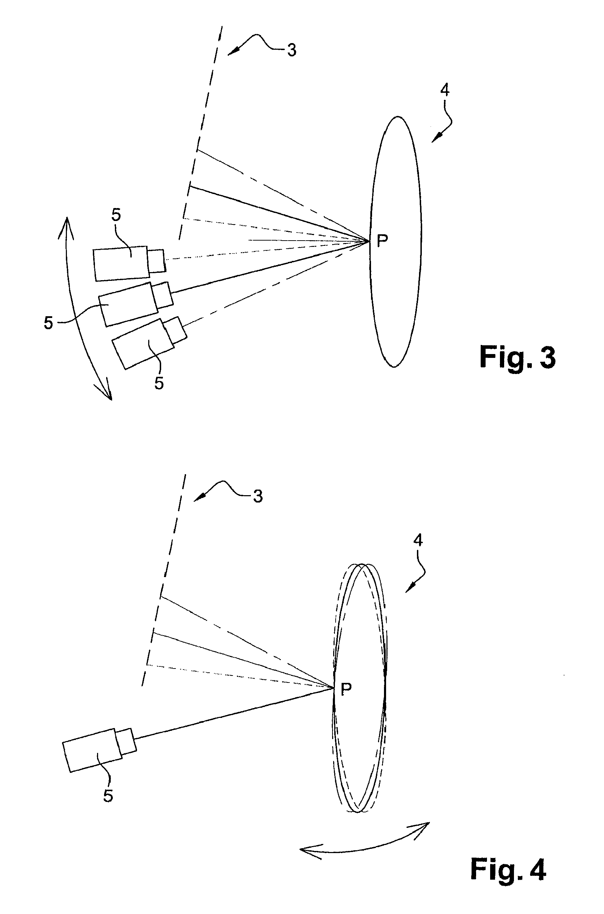

Selon le mode de réalisation illustré à la figure 3, l'installation diffère de l'installation illustrée à la figure 1 en ce que :
- le panneau 2 est fixe,
- l'installation comporte au moins une caméra 5 (une seule est représentée),
- chaque caméra 5 est mobile en rotation autour du centre de son champ de vision, le centre du champ de vision visant un point P fixe de la surface d'un objet 4.

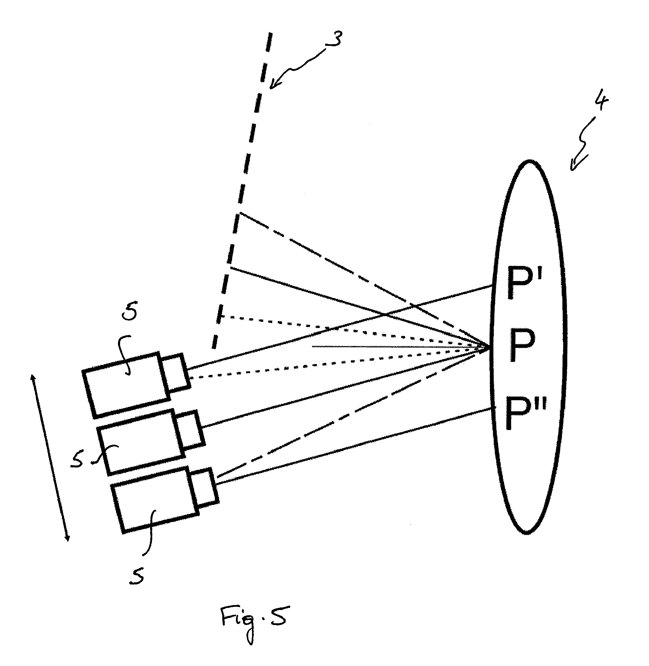

Selon la variante d'exécution illustrée à la figure 5, l'installation diffère de l'installation illustrée à la figure 3 en ce que :
- chaque caméra 5 (une seule est représentée) est mobile en translation relativement à la surface de l'objet 4 entre une pluralité de positions, le centre du champ de vision visant respectivement les points P', P et P" suivant la pluralité de positions,
- l'installation comporte des moyens de traitement (non représentés) des images capturées, les moyens de traitement étant configurés pour recaler lesdites images capturées par translation sur le point P fixe de la surface de l'objet 4.

Selon le mode de réalisation illustré à la figure 4, l'installation diffère de l'installation illustrée à la figure 1 en ce que :
- le panneau 2 est fixe,
- l'installation comporte une caméra 5,
- le support 1 d'un objet 4 est mobile autour du point P de la surface de l'objet 4 situé au centre du champ de vision de la caméra 5, le déplacement entre deux positions successives du support 1 étant conçu de manière à introduire un décalage de phase prédéterminé entre deux images du réseau 3 de franges réfléchies par la surface de l'objet 4.

Une telle mobilité du support 1 de l'objet 4 consiste en des rotations autour de ce point P afin de déplacer une image du réseau 3 de franges réfléchie par la surface de l'objet 4 sans déplacer l'objet 4 lui-même dans le champ de vision. Les rotations s'effectuent autour d'axes déterminés de manière à ce que les images du réseau 3 de franges réfléchies par la surface de l'objet 4 se déplacent dans des directions correspondant à leur décalage de phase.

Bien entendu, les modes de réalisation de l'invention décrits ci-dessus ne présentent aucun caractère limitatif. Des détails et améliorations peuvent y être apportés dans d'autres variantes d'exécution sans pour autant sortir du cadre de l'invention.

## Revendications

1. Installation de contrôle de la qualité d'une surface d'un objet (4) **caractérisée en ce qu'**elle comporte :
- un support (1) de l'objet (4),
- un panneau (2) comprenant un réseau (3) de franges alternant des lignes claires (30) et sombres (31), le réseau (3) de franges présentant une première série de franges sensiblement parallèles s'étendant suivant une première direction et selon un premier pas (p), et une seconde série de franges sensiblement parallèles s'étendant suivant une seconde direction sensiblement perpendiculaire à la première direction, et selon un second pas (p),
- des moyens d'éclairage agencés pour éclairer le réseau (3) de franges,
- au moins un moyen de capture d'image, notamment de type caméra (5), le ou chaque moyen de capture présentant un champ de vision, et étant agencé pour capturer dans le champ de vision correspondant une image du réseau (3) de franges réfléchie ou transmise par la surface de l'objet (4), et
au moins un élément sélectionné dans le groupe comportant le support (1) de l'objet, le panneau (2) et le ou chaque moyen de capture est mobile entre une pluralité de positions, le déplacement entre deux positions successives de chaque élément sélectionné étant conçu de manière à introduire un décalage de phase prédéterminé entre deux images du réseau (3) de franges réfléchies ou transmises par la surface de l'objet (4).

2. Installation selon la revendication 1, **caractérisée en ce que** le panneau (2) est mobile suivant la première et la seconde direction du réseau de (3) franges respectivement entre une première et une seconde pluralité de positions, le déplacement entre deux positions successives de la première et de la seconde pluralité de positions correspondant respectivement à une fraction entière prédéterminée du premier et du second pas (p) du réseau (3) de franges.

3. Installation selon la revendication 2, **caractérisée en ce que** le ou chaque moyen de capture d'image est agencé pour capturer l'image du réseau (3) de franges réfléchie ou transmise par la surface de l'objet (4) pour chacune de la première et de la seconde pluralité de positions du panneau (2).

4. Installation selon la revendication 2 ou 3, **caractérisée en ce qu'**elle comporte des moyens de déplacement du panneau comprenant au moins un premier actionneur et au moins un second actionneur, de préférence du type linéaire électrique ou linéaire pneumatique, le premier et le second actionneur étant agencés pour respectivement déplacer le panneau (2) suivant la première et la seconde direction du réseau (3) de franges.

5. Installation selon la revendication 4, **caractérisée en ce qu'**elle comporte des moyens de guidage, de préférence des rails de guidage, agencés pour guider le panneau (2) suivant la première et la seconde direction du réseau (3) de franges.

6. Installation selon l'une des revendications 2 à 5, **caractérisée en ce que** le panneau (2) présente :
- une face dite avant (20) destinée à être orientée vers l'objet (4), et comprenant le réseau (3) de franges,
- une face dite arrière (21) opposée,
- des orifices traversant ménagés en son sein,
et **en ce que** le ou chaque moyen de capture est fixé sur la face arrière (21) du panneau (2) de manière à capturer dans le champ de vision correspondant à travers les orifices traversant une image du réseau (3) de franges réfléchie ou transmise par la surface de l'objet.

7. Installation selon la revendication 1, **caractérisée en ce qu'**il comporte un moyen de capture, et **en ce que** le support (1) de l'objet (4) est mobile autour du point (P) de la surface de l'objet (4) situé au centre du champ de vision du moyen de capture, lorsque l'objet (4) est disposé sur le support (1), le déplacement entre deux positions successives du support (1) étant conçu de manière à introduire un décalage de phase prédéterminé entre deux images du réseau (3) de franges réfléchies par la surface de l'objet (4).

8. Installation selon la revendication 1, **caractérisée en ce que** le ou chaque moyen de capture est mobile autour du centre du champ de vision correspondant entre la pluralité de positions, le centre du champ de vision correspondant étant destiné à viser un point (P) fixe de la surface de l'objet (4).

9. Installation selon la revendication 1, **caractérisée en ce que** le ou chaque moyen de capture est mobile en translation relativement à la surface de l'objet (4) entre la pluralité de positions, et **en ce que** l'installation comporte des moyens de traitement des images capturées, les moyens de traitement étant configurés pour recaler lesdites images capturées par translation sur un point (P) fixe de la surface de l'objet (4)

10. Installation selon l'une des revendications 1 à 9, **caractérisée en ce que** le premier pas (p) du réseau (3) de franges est sensiblement égal au second pas (p).

11. Installation selon l'une des revendications 1 à 10, **caractérisée en ce que** le panneau (2) est réalisé dans une matière souple et s'étend de manière à former une portion de cylindre.
